# EUROPÄISCHE PATENTSCHRIFT

(11) **EP 3 578 032 B1**
(45) Veröffentlichungstag und Bekanntmachung des Hinweises auf die Patenterteilung: **18.12.2024**
(21) Anmeldenummer: 19168031.3
(22) Anmeldetag: 09.04.2019
(51) Int. Cl.: A01D 41/127, A01B 79/00

(54) **VERFAHREN ZUR STEUERUNG EINER LANDWIRTSCHAFTLICHEN ERNTEKAMPAGNE**
METHOD FOR CONTROLLING AN AGRICULTURAL HARVESTING PROGRAMME
PROCÉDÉ DE COMMANDE D'UNE CAMPAGNE DE RÉCOLTE AGRICOLE

(30) Priorität: 05.06.2018 DE 102018113327
(43) Veröffentlichungstag der Anmeldung: 11.12.2019
(73) Patentinhaber: CLAAS Selbstfahrende Erntemaschinen GmbH, 33428 Harsewinkel (DE)
(72) Erfinder: Baumgarten, Joachim, 48361 Beelen (DE); Kriebel, Bastian, 79104 Feriburg (DE); Bormann, Bastian, 33334 Gütersloh (DE); Redenius, Jannik, 32361 Pr. Oldendorf (DE); Skiba, Andreas, 33647 Bielefeld (DE); Reinecke, Max, 33775 Versmold (DE); Smolnik, Ivan, 33428 Harsewinkel (DE)
(74) Vertreter: CLAAS Gruppe

(56) Entgegenhaltungen:
- EP-A1- 2 174 537
- EP-A1- 2 605 200
- EP-A1- 3 097 759
- EP-B1- 2 174 537
- BE-B1- 1 024 475
- US-A1- 2011 112 730

## Beschreibung

Die vorliegende Erfindung betrifft ein Verfahren zur Steuerung einer landwirtschaftlichen Erntekampagne gemäß Anspruch 1 sowie eine selbstfahrende landwirtschaftliche Arbeitsmaschine zur Durchführung eines solchen Verfahrens gemäß Anspruch 18.

Der Begriff "selbstfahrende landwirtschaftliche Arbeitsmaschine" ist vorliegend weit zu verstehen. Darunter fallen nicht nur Erntemaschinen, wie Mähdrescher und Feldhäcksler, sondern auch Zugmaschinen, wie Traktoren oder dergleichen.

Das bekannte Verfahren zur Steuerung einer Ernteaktion in Form einer Mähdreschaktion (DE 10 2016 118 651 A1), von dem die Erfindung ausgeht, nutzt maschinenlokale Feldinformationen, die von den Sensoren einer Arbeitsmaschine bereitgestellt werden, um Ernteprozessketten zu optimieren. Die Optimierung basiert auf Feldinformationen einer Umfelddetektionseinrichtung, die der betreffenden Arbeitsmaschine zugeordnet ist. Mittels der Umfelddetektionseinrichtung lassen sich Guteigenschaften wie die Bestandsdichte oder die Kornfeuchte ermitteln und im Rahmen der Optimierung verarbeiten.

Ein weiteres Verfahren zur Steuerung einer Erntekampagne ist z.B. aus EP 2 174 537 A1 bekannt.

Die optimierte Steuerung einer ganzen Erntekampagne, in der auf einem Feldkontingent, also auf einer Feldfläche aus einem oder mehreren Feldern, vorbestimmte Ernteaktionen innerhalb eines Kampagnenzeitraums abgearbeitet werden sollen, stellt je nach Optimierungskriterium eine komplexe Herausforderung dar, die sich mit den bekannten Verfahren nur im Ansatz meistern lässt.

Der Erfindung liegt das Problem zugrunde, das bekannte Verfahren derart auszugestalten und weiterzubilden, dass die Optimierung der Steuerung einer landwirtschaftlichen Erntekampagne mit geringer steuerungstechnischer Komplexität verbessert wird.

Das obige Problem wird durch ein Verfahren mit den Merkmalen von Anspruch 1 gelöst.

Wesentlich ist zunächst die grundsätzliche Überlegung, dass die Steuerung der Erntekampagne in unterschiedlichen steuerungstechnischen Anwendungsebenen strukturiert wird. Damit wird die Steuerung der Erntekampagne auf die Anwendungsebenen verteilt, so dass die steuerungstechnische Komplexität der in den einzelnen Anwendungsebenen jeweils gering ist.

Wesentlich ist weiter, dass in den Anwendungsebenen jeweils Informationen erzeugt werden und dass die erzeugten Informationen jeweils allen anderen Anwendungsebenen bereitgestellt werden. Die Erzeugung der Informationen kann hier in einem engen Sinne die datentechnische Verarbeitung von Eingangsdaten zu Ausgangsdaten oder in einem weiten Sinne der Empfang von Daten von einer Datenquelle sein. Mit dieser durchgängigen Verfügbarkeit der Feldinformationen über alle Anwendungsebenen liegen stets alle für eine effiziente Optimierung der Steuerung der Erntekampagne erforderlichen Informationen vor.

Wesentlich ist schließlich, dass die erzeugten Informationen Fernerkundungs-Feldinformationen umfassen. Hier zeigt sich der besondere Vorteil der Verfügbarkeit der Information in allen Anwendungsebenen. Denn die Erzeugung, also der Empfang, der Fernerkundungs-Feldinformationen ist meist aufwendiger als die Erzeugung lokaler Informationen wie beispielsweise lokaler Umfeldinformationen. Dies ist insbesondere zutreffend, wenn die Fernerkundungs-Feldinformationen von einem externen Dienstleister bezogen werden.

Die erfindungsgemäße Ausgestaltung betrifft die Strukturierung der Anwendungsebenen in eine Grob-Anwendungsebene, in eine Fein-Anwendungsebene und in eine Maschinen-Anwendungsebene. Diese Dreiteilung hat sich in der Praxis im Hinblick auf die Erzeugung von Abarbeitungsreihenfolgen, Ernteaktionen und Maschinensteuerdaten als besonders niedrigkomplex in der steuerungstechnischen Umsetzung herausgestellt.

Bei der weiter bevorzugten Ausgestaltung gemäß Anspruch 2 wird die Erntekampagne mittels eines Steuersystems in unterschiedlichen Steuerroutinen gesteuert, was bei geeigneter, noch zu erläuternder Definition der Steuerroutinen mit einer entsprechenden Reduzierung der Komplexität einhergeht. Der Begriff "Steuerroutine" ist im Sinne einer Routine zu verstehen, die sequentiell und/oder parallel zu anderen Routinen ablaufen kann und die sich in üblicher Weise softwaremäßig realisieren lässt. Die Steuerroutinen laufen auf einem Steuersystem ab, das in noch zu erläuternder Weise mit verteilter Steuerhardware ausgestattet sein kann.

Wie oben angesprochen, liegen für die Steuerung der Erntekampagne nicht nur maschinenlokale Informationen vor, sondern auch Informationen aus in Bezug auf die Maschinenflotte maschinenfernen Datenquellen. Solche Informationen werden vorliegend als Fernerkundungs-Feldinformationen bezeichnet. Vorzugsweise sind dabei beide Arten von Informationen ständig in allen Steuerroutinen verfügbar.

Vorzugsweise ist es so, dass in mindestens einer der Steuerroutinen georeferenzierte Fernerkundungs-Feldinformationen aus in Bezug auf die Maschinenflotte maschinenfernen Datenquellen verarbeitet werden, wobei in mindestens einer der Steuerroutinen georeferenzierte Live-Feldinformationen aus maschineneigenen Datenquellen, insbesondere Sensordatenquellen, der Maschinenflotte verarbeitet werden und wobei zumindest ein Teil dieser Feldinformationen in mindestens zwei Steuerroutinen verarbeitet wird (Anspruch 3).

Weiter hat es sich gemäß Anspruch 4 als vorteilhaft herausgestellt, insgesamt mindestens drei Steuerroutinen zu definieren, die jeweils einer der obigen Anwendungsebenen zugeordnet sind und die zumindest größten Teils gleichzeitig ablaufen können.

Im Einzelnen wird im Hinblick auf die Definition der Steuerroutinen vorgeschlagen, dass in einer Grob-Steuerroutine basierend auf den obigen Feldinformationen die Abarbeitungsreihenfolge der Ernteaktionen über den Kampagnenzeitraum erzeugt wird, dass in einer Fein-Steuerroutine basierend auf den Feldinformationen zur Umsetzung der Abarbeitungsreihenfolge Ernteprozessketten erzeugt werden und dass während des Erntebetriebs in einer Maschinen-Steuerroutine basierend auf den Feldinformationen zur Umsetzung der Ernteprozessketten Maschinensteuerdaten erzeugt werden.

In der Grob-Steuerroutine geht es also nur darum, in welcher zeitlichen Reihenfolge die verschiedenen Ernteaktionen über den Kampagnenzeitraum abgearbeitet werden sollen. Eine Ernteaktion kann das Abernten eines ganzen Feldes oder das Abernten einer noch zu erläuternden Feldzone betreffen.

Die Fein-Steuerroutine betrifft die Erzeugung der Ernteprozessketten, die für den Ablauf der obigen Ernteaktionen erforderlich sind. Hierbei handelt es sich um die Definition von Teilprozessen wie Ernte-Teilprozessen, Überlade-Teilprozessen oder dergleichen. Schließlich betrifft die Maschinen-Steuerroutine die Erzeugung konkreter Maschinensteuerdaten zur Ansteuerung der Arbeitsmaschinen.

Mit der Strukturierung der Steuerroutinen in die Grob-Steuerroutine, die Fein-Steuerroutine und die Maschinen-Steuerroutine eine Reduzierung der Komplexität im Hinblick auf die Steuerung einer ganzen landwirtschaftlichen Erntekampagne, so dass der Anstieg an Komplexität, der mit der Verarbeitung der Fernerkundungs-Feldinformationen und der maschinenlokalen Feldinformationen an sich einhergeht, gewissermaßen ausgeglichen wird.

Dies ermöglicht auch die Verarbeitung beider oben genannter Arten von Feldinformationen in allen drei Steuerroutinen, soweit dies vorteilhaft erscheint. Beispielsweise kann in der Grob-Steuerroutine zusätzlich auf die maschinenlokalen Feldinformationen zurückgegriffen werden, um zu prüfen, ob die Live-Feldinformationen konsistent mit den Fernerkundungs-Feldinformationen sind. Gegebenenfalls kann noch während des Erntebetriebs eine Anpassung der Abarbeitungsreihenfolge oder sogar eine Korrektur der Fernerkundungs-Feldinformationen vorgenommen werden.

Gleichermaßen ist es denkbar, dass in der Fein-Steuerroutine, beispielsweise bei der Definition von Überlade-Teilprozessen, die Bestandsdichte eines kompletten Feldes von den Fernerkundungs-Feldinformationen abgeleitet wird, so dass eine entsprechend langfristige Planung der Überlade-Teilprozesse möglich ist.

Schließlich können in der Maschinen-Steuerroutine neben den Live-Feldinformationen auch die Fernerkundungs-Feldinformationen genutzt werden, beispielsweise um abzuschätzen, ob es sich bei auftretenden Schwankungen in den maschinenlokalen Feldinformationen voraussichtlich nur um "Ausreißer", oder um einen systematischen Trend handelt.

Aus alledem ergibt sich, dass das vorschlagsgemäße Verfahren eine besonders gute Grundlage für eine Optimierung der Steuerung einer landwirtschaftlichen Erntekampagne bereitstellt, die speziell angesichts der zu erwartenden Redundanzen zwischen den Fernerkundungs-Feldinformationen und den Live-Feldinformationen eine besonders hohe Robustheit erlaubt.

Das vorschlagsgemäße Verfahren lässt sich auf einer verteilten Systemhardware gemäß Anspruch 4 betreiben, was eine Anpassung der steuerungstechnischen Steuerung auf die jeweiligen steuerungstechnischen Randbedingungen erlaubt.

Die weiter bevorzugte Ausgestaltung gemäß Anspruch 5 betrifft die Gliederung des der Erntekampagne zugeordneten Feldkontingents in georeferenzierte Feldzonen, in denen jeweils eine Guteigenschaft einheitlich vorliegt, und dass die Definition der Feldzonen in dem Steuersystem abgelegt wird. Dies vereinfacht insbesondere die Erzeugung der Abarbeitungsreihenfolge in der Grob-Steuerroutine, indem die Feldzonen in den betreffenden Planungsschritten jeweils als Einheit betrachtet werden.

Die Maschinensteuerdaten werden im Rahmen der Maschinen-Steuerroutine stets während des Erntebetriebs erzeugt, wie gemäß Anspruch 7 vorgeschlagen wird. Die Erzeugung der Abarbeitungsreihenfolge im Rahmen der Grob-Steuerroutine und die Erzeugung der Ernteprozessketten im Rahmen der Fein-Steuerroutine dagegen werden vorzugsweise zumindest auch vor dem Erntebetrieb erzeugt. Im Übrigen können alle Steuerroutinen zeitlich überlappend ablaufen.

Die ebenfalls bevorzugten Ausgestaltungen gemäß den Ansprüchen 8 und 9 betreffen die Hinterlegung bereits erzeugter, optimierter Ernteprozessketten bzw. Maschinensteuerdaten in dem Steuersystem, und zwar mit einem ausdrücklichen Bezug zu der jeweiligen Feldzone. Hier ist es also vorgesehen, dass den Feldzonen nicht nur eine Guteigenschaft, sondern optimierte Ernteprozessketten bzw. Maschinensteuerdaten zugeordnet sind. Hier zeigt sich, dass die Gliederung des Feldkontingents in Feldzonen mit einer beträchtlichen Vereinfachung der betreffenden Planungsschritte einhergeht. Dies ist insbesondere der Fall, wenn, wie in Anspruch 10 vorgeschlagen, das Abernten der Feldzonen jeweils als Einheit vorgesehen ist.

Eine Tageszeit-abhängige Veränderung der Guteigenschaften des Feldkontingents insgesamt bzw. der Feldzonen betreffen die Ansprüche 11 bis 13. Hierfür sind die Fernerkundungs-Feldinformationen und/oder die Live-Feldinformationen und/oder die Feldzonen jeweils tageszeit-referenziert. Insbesondere für die Feldzonen bedeutet dies, dass die Gliederung des Feldkontingents in Feldzonen gemäß Anspruch 12 separat für unterschiedliche Tageszeiten vorgenommen und abgespeichert werden muss. Mit den letztgenannten, bevorzugten Ausgestaltungen lässt sich eine auf die jeweilige Tageszeit hin optimierte Steuerung der landwirtschaftlichen Erntekampagne erzeugen, ohne dass die Komplexität der damit verbundenen Planungsschritte übermäßig ansteigt.

Die weiter bevorzugte Ausgestaltung gemäß Anspruch 14 trägt dem Umstand Rechnung, dass Fernerkundungs-Feldinformationen oftmals nicht in absoluten Werten vorliegen, so dass stets eine Kalibrierung dieser Informationen erforderlich ist.

In der Maschinen-Steuerroutine ist es gemäß Anspruch 15 vorzugsweise vorgesehen, dass die Feldzonen dem Maschinenbediener angezeigt werden, so dass der Bediener Zugriff auf die der Abarbeitungsreihenfolge zugrundeliegenden Informationen hat. Die Definition der Feldzonen erlaubt eine besonders übersichtliche, insbesondere grafische, Darstellung.

Die weiter bevorzugten Ausgestaltungen gemäß den Ansprüchen 16 und 17 betreffen vorteilhafte Varianten für die Erzeugung der Fernerkundungs-Feldinformationen einerseits und der Live-Feldinformationen andererseits.

Im Folgenden wird die Erfindung anhand einer lediglich ein Ausführungsbeispiel darstellenden Zeichnung näher erläutert. In der Zeichnung zeigt
- Fig. 1: eine grafische Repräsentation einer landwirtschaftlichen Erntekampagne und
- Fig. 2: eine grafische Repräsentation der Steuerroutinen, die der Steuerung der landwirtschaftlichen Erntekampagne gemäß Fig. 1 zu Grunde liegen.

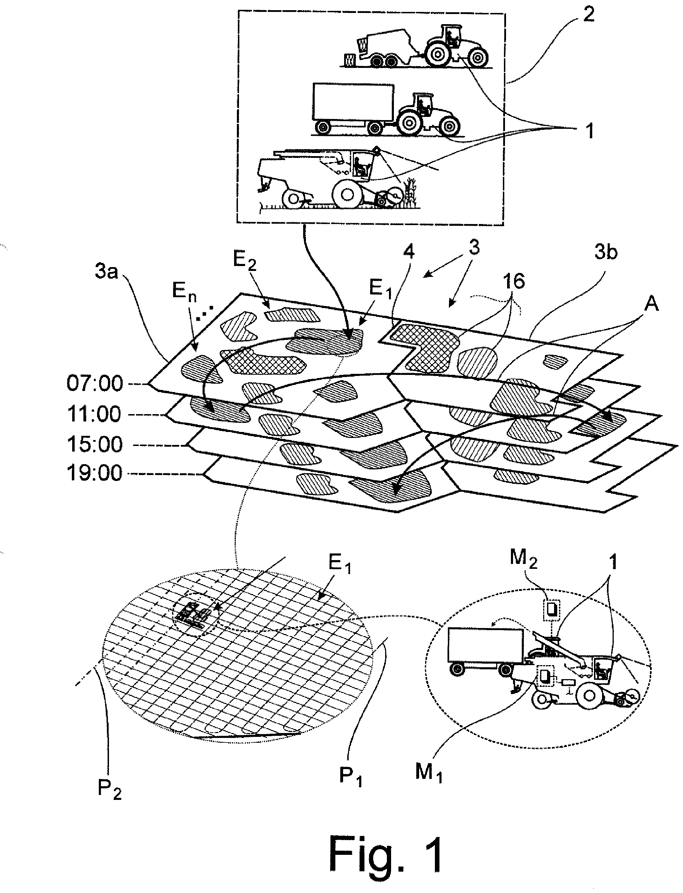

Die vorschlagsgemäße Lösung lässt sich auf einen weiten Bereich landwirtschaftlicher Arbeitsmaschinen 1 anwenden. Bei dem in Fig. 1 angedeuteten Szenario sind die Arbeitsmaschinen 1 einer Maschinenflotte 2 zugeordnet. Bei den Arbeitsmaschinen 1 handelt es sich beispielsweise um Mähdrescher, Transportgespanne, Ballenpressen, Zugmaschinen oder dergleichen.

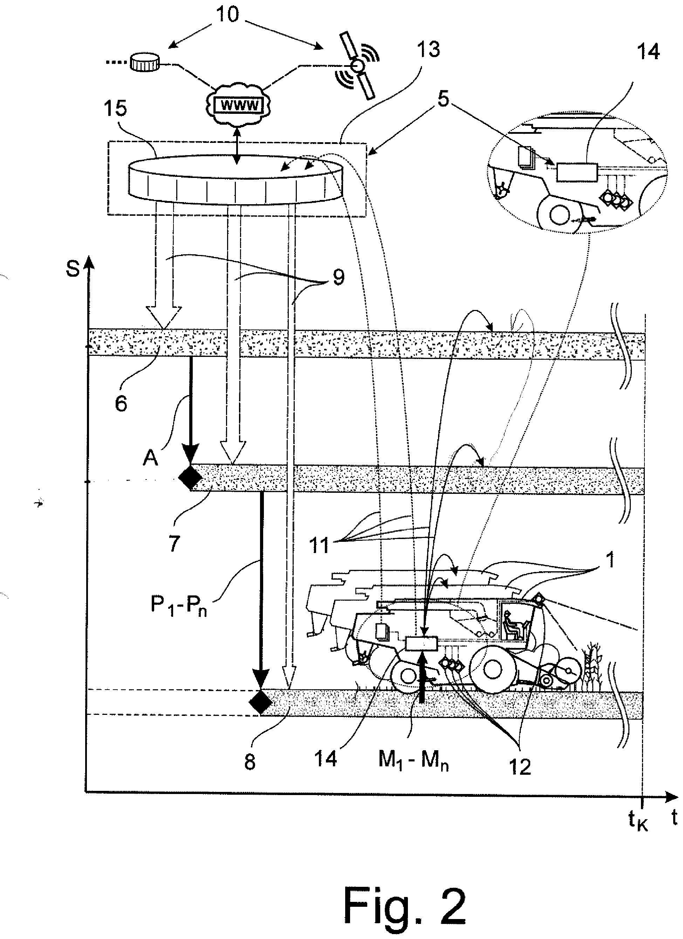

Das vorschlagsgemäße Verfahren dient der Steuerung einer landwirtschaftlichen Erntekampagne. Der Begriff "Erntekampagne" ist vorliegend so definiert, dass in der Erntekampagne auf einem der Erntekampagne zugeordneten Feldkontingent 3 vorbestimmte Ernteaktionen E₁-Eₙ innerhalb eines Kampagnenzeitraums t_{K} von mehreren landwirtschaftlichen Arbeitsmaschinen 1 der Maschinenflotte 2 abgearbeitet werden. Der Begriff "Feldkontingent" betrifft ein Feld oder eine Mehrzahl von Feldern, die innerhalb des Kampagnenzeitraums t_{K} abzuarbeiten sind. Bei dem in Fig. 2 gezeigten Szenario umfasst das Feldkontingent 3 zwei Felder 3a, 3b, die an einer Grenzlinie 4 unmittelbar aneinander angrenzen. Grundsätzlich kann es aber auch vorgesehen sein, dass die Felder 3a, 3b eines Feldkontingents 3 zumindest zum Teil getrennt voneinander angeordnet sind.

Der Kampagnenzeitraum t_{K} kann in Abhängigkeit von den jeweils herrschenden Gegebenheiten unterschiedlich bemessen sein. Vorzugsweise repräsentiert der Kampagnenzeitraum t_{K} einen Erntezeitraum für das betreffende Erntegut, der sich üblicherweise über mehrere Monate erstreckt.

Für die Steuerung einer solchen landwirtschaftlichen Erntekampagne sind die Arbeitsmaschinen 1 in einer möglichst optimalen zeitlichen Reihenfolge mit möglichst optimalen Maschinensteuerdaten einzusetzen. Hierfür stehen umfangreiche Feldinformationen zur Verfügung, die nicht nur georeferenziert, sondern auch Tageszeit-referenziert sein können. Dies bedeutet, dass die betreffenden Feldinformationen unterschiedliche Werte annehmen nicht nur in Abhängigkeit von dem Ort, sondern auch in Abhängigkeit von der Zeit.

Um die obige, komplexe Steueraufgabe in einfache Teilsteueraufgaben überführen zu können, wird vorgeschlagen, dass die Steuerung der Erntekampagne in unterschiedlichen steuerungstechnischen Anwendungsebenen vollzogen wird. In den Anwendungsebenen werden jeweils Informationen erzeugt, die für die Umsetzung von Steueraufgaben benötigt werden. Ganz allgemein ist es vorgesehen, dass die erzeugten Informationen jeweils allen anderen Anwendungsebenen bereitgestellt werden. Die dabei erzeugten Informationen umfassen zumindest noch zu erläuternde Fernerkundungs-Feldinformationen. Die resultierende Reduzierung der Komplexität bei der Steuerung der Erntekampagne wurde weiter oben bereits erläutert.

Hier und vorzugsweise sind drei Anwendungsebenen definiert, was nicht beschränkend zu verstehen ist. In einer Grob-Anwendungsebene wird die Abarbeitungsreihenfolge A der Ernteaktionen E₁-Eₙ über den Kampagnenzeitraum t_{K} erzeugt und den anderen Anwendungsebenen bereitgestellt. In einer Fein-Anwendungsebene werden Ernteprozessketten P₁-Pₙ erzeugt und wiederum den anderen Anwendungsebenen bereitgestellt. In einer Maschinen-Anwendungsebene schließlich werden Maschinensteuerdaten M₁-Mₙ erzeugt und den anderen Anwendungsebenen bereitgestellt. Daraus ergibt sich, dass die verschiedenen Anwendungsebenen letztlich Planungsebenen repräsentieren, in denen die Erntekampagne mit unterschiedlichem Abstraktionsgraden geplant wird.

In der hier bevorzugten Realisierung des vorschlagsgemäßen Verfahrens ist den Anwendungsebenen jeweils eine Steuerroutine zugeordnet, in der der auf die jeweilige Anwendungsebene entfallende Teil der Steuerung der Erntekampagne vollzogen wird. Vorzugsweise sind der Grob-Anwendungsebene eine Grob-Steuerroutine, der Fein-Anwendungsebene eine Fein-Steuerroutine und der Maschinen-Anwendungsebene eine Maschinen-Steuerroutine zugeordnet.

Vorzugsweise wird die Erntekampagne mittels eines Steuersystems 5 vorzugsweise in den unterschiedlichen Steuerroutinen 6 bis 8 gesteuert. Der Begriff "Steuerroutine" ist wie oben angedeutet so zu verstehen, dass ein irgendwie gearteter Steuervorgang abläuft, der insbesondere softwarebasiert auf der noch zu erläuternden Systemhardware des Steuersystems 5 abläuft. Die Steuerroutinen 6-8 können sequentiell und/oder zumindest zum Teil überlappend, also gleichzeitig, ablaufen.

Wie ebenfalls oben angedeutet, stehen den Steuerroutinen 6-8 umfangreiche Feldinformationen für die Abarbeitung der Steueraufgaben zur Verfügung. Vorliegend wird davon ausgegangen, dass zumindest zwei grundsätzliche Arten von Feldinformationen verfügbar sind. Zunächst einmal ist es vorgesehen, dass in mindestens einer der Steuerroutinen 6-8 georeferenzierte Fernerkundungs-Feldinformationen 9 aus bezogen auf die Maschinenflotte 2 maschinenfernen Datenquellen 10 verarbeitet werden. Hierbei handelt es sich um solche Feldinformationen, die in maschinenfernen Datenquellen 10 abgelegt, also gespeichert sind.

Ferner ist es vorgesehen, dass in mindestens einer der Steuerroutinen 6-8 georeferenzierte Live-Feldinformationen 11 aus maschineneigenen Datenquellen, insbesondere Sensordatenquellen wie den Sensoren 12, der Maschinenflotte 2 verarbeitet werden. Die Live-Feldinformationen 11 sind hier und vorzugsweise die Feldinformationen, die maschinenlokal, also von maschineneigenen Sensoren 12, im laufenden Erntebetrieb erzeugt und bereitgestellt werden. Dabei kann es sich um maschineninterne Feldinformationen wie die Schichthöhe, die Kornfeuchte oder dergleichen des die Arbeitsmaschine 1 durchlaufenden Erntegutstroms handeln. Alternativ oder zusätzlich kann es sich bei den Live-Feldinformationen 11 auch um Umfeldinformationen wie die Bestandsdichte oder die Bestandsfeuchte in der unmittelbaren Umgebung der Arbeitsmaschine 1 handeln.

Interessant bei der vorschlagsgemäßen Lösung ist die Tatsache, dass zumindest ein Teil dieser Feldinformationen in mindestens zwei Steuerroutinen verfügbar ist. Dies bedeutet, dass zumindest ein Teil der Fernerkundungs-Feldinformationen 9 und der Live-Feldinformationen 11 in mindestens zwei Steuerroutinen 6-8 verfügbar ist. Das ist insbesondere bemerkenswert, da beispielsweise in der Grob-Steuerroutine 6 nicht nur auf die Fernerkundungs-Feldinformationen 9, sondern auch auf die Live-Feldinformationen 11 zugegriffen werden kann, obwohl die Planung der Abarbeitungsreihenfolge A der Ernteaktionen E₁-Eₙ die hohe Dynamik der Live-Feldinformationen 11 an sich gar nicht erfordert. Allerdings ist erkannt worden, dass die Live-Feldinformationen 11 beispielsweise genutzt werden können, um die Fernerkundungs-Feldinformationen 9 an die tatsächlichen Gegebenheiten im Umfeld der jeweiligen Arbeitsmaschine 1 anzupassen, wie noch erläutert wird.

Ganz allgemein kann es sogar vorgesehen sein, dass jede in einer Steuerroutine 6-8 verfügbare Steuerinformation in allen anderen Steuerroutinen 6-8 verfügbar ist. Diese Durchgängigkeit in der Verfügbarkeit von Feldinformationen über alle Steuerroutinen 6-8 und damit über alle Anwendungsebenen hinweg erlaubt eine Optimierung der Erntekampagne unter Berücksichtigung aller im Einzelfall relevanten Feldinformationen.

Die Fernerkundungs-Feldinformationen 9 umfassen solche Feldinformationen, die ein der Erntekampagne zugeordnetes Feldkontingent 3 betreffen. Solche Feldinformationen sind insbesondere Biomassekarten, Kornmassekarten, NKB-Massekarten (NKB-Nichtkornbestandteile), Abreifekarten, Ertragskarten, Schwadablagekarten, Bodenfeuchtekarten, Taukarten, Unkrautkarten, Wetterinformationen oder dergleichen. Diese Fernerkundungs-Feldinformationen 9 werden mittels der betreffenden Systemhardware 13, 14 von Satelliten, Drohnen, maschinenfernen Datenbanken 15 oder dergleichen erzeugt bzw. bereitgestellt.

Die Live-Feldinformationen 11 dagegen werden von den maschinenseitigen Sensoren mindestens einer Arbeitsmaschine 1, hier und vorzugsweise mehrerer Arbeitsmaschinen 1, der Maschinenflotte 2 erzeugt bzw. bereitgestellt.

Der vorschlagsgemäßen Strukturierung der Steuerroutinen 6-8 kommt vorliegend besondere Bedeutung zu. Zunächst einmal ist eine Grob-Steuerroutine 6 vorgesehen, in der basierend auf den Feldinformationen 9, 11 die Abarbeitungsreihenfolge A der Ernteaktionen E₁-Eₙ über den Kampagnenzeitraum t_{K} erzeugt wird. Zur Steuerung dieser Abarbeitungsreihenfolge A werden in einer Fein-Steuerroutine 7 basierend auf den Feldinformationen 9, 11 Ernteprozessketten P₁-Pₙ erzeugt, die die Teilprozesse der der Abarbeitungsreihenfolge A zugrundeliegenden Ernteaktionen E₁-Eₙ betreffen. Dazu gehören beispielsweise Überlade-Teilprozesse, Transport-Teilprozesse oder dergleichen. Schließlich werden während des Erntebetriebs in einer Maschinen-Steuerroutine 8 basierend auf den Feldinformationen 9, 11 Maschinensteuerdaten M₁-Mₙ zur Steuerung der Arbeitsmaschinen 1 erzeugt. Bei den Maschinensteuerdaten handelt es sich um solche Daten, die für den Betrieb der Arbeitsmaschine 1 erforderlich sind. Dazu gehören beispielsweise Fahrmaschineneinstellungen wie die Soll-Vorfahrtgeschwindigkeit und der Soll-Reifendruck oder Aggregate-Einstellungen wie Dreschwerkseinstellungen, Anbaugeräte-Einstellungen oder dergleichen.

Für den bevorzugten Fall, dass in allen Steuerroutinen 6-8 alle Feldinformationen 9,11 ständig vorliegen, ergibt sich die Möglichkeit einer Optimierung der Steuerung der landwirtschaftlichen Erntekampagne mit besonders hoher Dynamik dadurch, dass die dynamischen Live-Feldinformationen 11 nunmehr durchgängig in allen Steuerroutinen 6-8 verarbeitet werden. Dadurch, dass sich eine gewisse Redundanz zwischen den Fernerkundungs-Feldinformationen 9 und den Live-Feldinformationen 11 ergibt, ist die obige Optimierung von hoher Robustheit, da fehlerhafte Informationen nicht notwendigerweise zu einer Fehlsteuerung führen.

Mit der vorschlagsgemäßen Lösung kann die Steuerung der Erntekampagne nah an den aktuellen und sich dynamisch ändernden Gegebenheiten ausgerichtet sein. Vorschlagsgemäß kann basierend auf den Fernerkundungs-Feldinformationen 9 und den Live-Feldinformationen 11 auch eine Prädiktion einer Guteigenschaft über einen Tagesverlauf basierend auf den Fernerkundungs-Feldinformationen 9 vorgenommen werden, die gegebenenfalls fortlaufend, insbesondere basierend auf den Live-Feldinformationen 11, weiter präzisiert werden kann.

Die Umsetzung des vorschlagsgemäßen Verfahrens kann mit ganz unterschiedlicher Hardware realisiert sein, auf der die jeweiligen Steuerroutinen 6-8 ablaufen. Vorzugsweise ist es so, dass mindestens ein Teil des Steuersystems 5, hier und vorzugsweise die Grob-Steuerroutine 6 und die Fein-Steuerroutine 7, auf einer maschinenfernen Systemhardware 13 abläuft bzw. ablaufen. Zusätzlich ist es vorzugsweise so, dass mindestens ein Teil des Steuersystems 5, hier und vorzugsweise die Maschinen-Steuerroutine 8, auf einer maschinenseitigen Systemhardware 14 abläuft. Insoweit handelt es sich bei dem Steuersystem 5 um ein hardwaretechnisch verteiltes Steuersystem.

Die maschinenseitige Systemhardware 14 kann grundsätzlich Bestandteil eines ohnehin vorgesehenen Fahrerassistenzsystems der jeweiligen Arbeitsmaschine 1 ausgestaltet sein. Denkbar ist aber auch, dass diese maschinenseitige Systemhardware 14 zusätzlich zu einer bestehenden Maschinensteuerung bzw. eines bestehenden Fahrerassistenzsystems realisiert ist.

Fig. 1 zeigt eine weitere interessante Variante für die vorschlagsgemäße Lösung, bei der das der Erntekampagne zugeordnete Feldkontingent 3 in georeferenzierte Feldzonen 16 gegliedert wird, insbesondere, um die Erzeugung der Abarbeitungsreihenfolge A der Ernteaktionen E₁-Eₙ zu vereinfachen. Im Einzelnen wird hier vorgeschlagen, dass in der Grob-Steuerroutine 6 das der Erntekampagne zugeordnete Feldkontingent 3 in Abhängigkeit von mindestens einer Guteigenschaft, die von den Fernerkundungs-Feldinformationen 9 und/oder Live-Feldinformationen 11 abgeleitet wird, in georeferenzierte Feldzonen 16 gegliedert wird, in denen jeweils eine Guteigenschaft einheitlich vorliegt. Beispielsweise kann eine solche Feldzone 16 dadurch definiert sein, dass die Kornfeuchte des abzuerntenden Kornbestands in einem vorbestimmten Feuchtebereich liegt. In Fig. 1 sind die identisch definierten Feldzonen 16 mit entsprechend identischen Schraffierungen versehen worden.

Mit der Aufteilung des Feldkontingents 3 in georeferenzierte Feldzonen gleicher Guteigenschaft lässt sich das Feldkontingent 3 im Hinblick auf die jeweils interessierende Guteigenschaft auf einfache Weise strukturieren. Vorteilhaft dabei ist ganz allgemein die Tatsache, dass der Erntebetrieb für die unterschiedlichen Feldzonen entsprechend unterschiedlich durchgeführt werden kann. Für den Fall, dass Feldzonen gleicher Bestandsdichte definiert sind, können Arbeitsmaschinen 1 unterschiedlicher Durchsatzleistung auf die Feldzonen 16 unterschiedlicher Bestandsdichte beispielsweise derart verteilt werden, dass sich eine insgesamt optimale Maschinenauslastung ergibt.

Die Maschinensteuerdaten werden im Rahmen der Maschinen-Steuerroutine 8 vorzugsweise während des Erntebetriebs erzeugt. Dagegen werden die Abarbeitungsreihenfolge im Rahmen der Grob-Steuerroutine 6 und die Ernteprozessketten P₁-Pₙ im Rahmen der Fein-Steuerroutine 7 zumindest auch vor dem Erntebetrieb erzeugt. In besonders bevorzugter Ausgestaltung ist es so, dass die Abarbeitungsreihenfolge und die Ernteprozessketten P₁-Pₙ laufend, also auch während des Erntebetriebs, im Hinblick auf jeweils aktuelle Feldinformationen 9, 11 optimiert werden.

Die Definition der obigen Feldzonen 16 vereinfacht nicht nur die Strukturierung des Erntebetriebs, sondern ermöglicht auch die leichte Wiederverwendbarkeit von bereits für die jeweilige Feldzone 16 erzielten Optimierungsergebnissen. Im Einzelnen ist es vorzugsweise vorgesehen, dass im Rahmen der Fein-Steuerroutine 7 nach einer Optimierungsstrategie optimierte Ernteprozessketten P₁-Pₙ erzeugt werden. Alternativ oder zusätzlich kann es vorgesehen sein, dass im Rahmen der Maschinen-Steuerroutine 8 nach einer Optimierungsstrategie optimierte Maschinensteuerdaten M₁-Mₙ erzeugt werden. Wesentlich ist nun, dass die optimierten Ernteprozessketten P₁-Pₙ und/oder die optimierten Maschinensteuerdaten M₁-Mₙ zusammen mit der jeweils zugeordneten Feldzone 16 als Fernerkundungs-Feldinformationen 9 in dem Steuersystem 5 abgelegt werden können. Damit ist grundsätzlich die Mehrfachnutzung von Optimierungsergebnissen für räumlich getrennt angeordnete Feldzonen 16 gleicher Guteigenschaft möglich. Insbesondere können die auf einer ersten Arbeitsmaschine 1 erzeugten Optimierungsergebnisse für eine andere Arbeitsmaschine 1 genutzt werden. Dabei muss nur die erstgenannte Arbeitsmaschine 1 steuerungstechnisch für die Optimierung ausgerüstet sein, während die andere Arbeitsmaschine 1 steuerungstechnisch nur rudimentär ausgestattet sein muss.

Ganz allgemein ist es in diesem Zusammenhang vorgesehen, dass im Rahmen der Fein-Steuerroutine 7 und/oder im Rahmen der Maschinen-Steuerroutine 8 der Erzeugung der Ernteprozessketten P₁-Pₙ und/oder der Erzeugung der Maschinensteuerdaten M₁-Mₙ für eine Feldzone 16 die dieser Feldzone 16 zugeordneten Fernerkundungs-Feldinformationen 9 zugrunde gelegt werden. Wie oben erläutert, kann es sich bei diesen Fernerkundungs-Feldinformationen 9 um Optimierungsergebnisse, beispielsweise in Form von optimierten Aggregateeinstellungen oder dergleichen handeln.

Eine besonders einfache Erzeugung der Abarbeitungsreihenfolge A ergibt sich dadurch, dass in der Grob-Steuerroutine 6 die Abarbeitungsreihenfolge A der Ernteaktionen E₁-Eₙ so definiert wird, dass die Feldzonen 16 jeweils als Einheit abgeerntet werden. Durch diese einheitliche Behandlung der Feldzonen 16 im Rahmen der Steuerroutinen ergibt sich eine besonders deutliche Reduzierung der oben angesprochenen Komplexität.

Angesichts der Tatsache, dass die hier in Rede stehenden Guteigenschaften, insbesondere die Kornfeuchte, zeitabhängigen, insbesondere Tageszeitabhängigen, Veränderungen unterliegen, ist es vorzugsweise vorgesehen, dass schon in der Grob-Steuerroutine 6 die Abarbeitungsreihenfolge zeitreferenziert, insbesondere Tageszeit-referenziert, erzeugt wird, wobei hierfür die Fernerkundungs-Feldinformationen 9 und/oder die Live-Feldinformationen 11 entsprechend Tageszeit-referenziert sind. Der Begriff "Tageszeit-referenziert" bedeutet an diesem Beispiel, dass im Rahmen der Erzeugung der Abarbeitungsreihenfolge den Ernteaktionen E₁-Eₙ ein Zeitstempel zugeordnet wird, der auch eine Tageszeit für die Abarbeitung der betreffenden Ernteaktion E₁-Eₙ umfasst. Hierfür ist es besonders vorteilhaft, wenn die betreffenden Feldinformationen 9, 11, wie oben angedeutet, Tageszeit-referenziert sind.

Wie der Darstellung gemäß Fig. 1 zu entnehmen ist, sind hier und vorzugsweise auch die Feldzonen 16 Tageszeit-referenziert. Hierfür wird in der Grob-Steuerroutine 6 die Gliederung des der Erntekampagne zugeordneten Feldkontingents 3 in Feldzonen 16 separat für unterschiedliche Tageszeiten vorgenommen und in dem Steuersystem abgelegt.

Die oben angesprochene, Tageszeit-referenzierte Abarbeitungsreihenfolge zeigt sich beispielsweise dadurch, dass in der Grob-Steuerroutine 6 für den Fall, dass zumindest ein Teil der Feldzonen 16 zu unterschiedlichen Tageszeiten sich verändernde Guteigenschaftswerte, hier und vorzugsweise Kornfeuchtewerte, annimmt, die Abarbeitungsreihenfolge A über den Tagesverlauf im Hinblick auf die sich verändernden Guteigenschaftswerte erzeugt wird. In Fig. 1 ist dies dadurch angedeutet, dass die Abarbeitungsreihenfolge A je nach der zu erwartenden Abarbeitungszeit das Abernten der nächsten Feldzone vorsieht, die vorzugsweise von identischer Feldzonendefinition ist.

Besonders vorteilhaft bei der vorschlagsgemäßen Lösung ist die Tatsache, dass Fernerkundungs-Feldinformationen 9 und Live-Feldinformationen 11 gleichzeitig vorliegen können, beispielsweise, wenn im Rahmen der Grob-Steuerroutine 6 die Abarbeitungsreihenfolge A erzeugt wird. Hier kann gewissermaßen ein Abgleich zwischen den Fernerkundungs-Feldinformationen 9 und den Live-Feldinformationen 11 stattfinden, so dass oben angesprochene Ausreißer in den Feldinformationen unberücksichtigt bleiben. Ganz allgemein kann es in diesem Sinne vorgesehen sein, dass zumindest ein Teil der Fernerkundungs-Feldinformationen 9 basierend auf den Live-Feldinformationen 11 kalibriert wird. Dies ist auch vor dem Hintergrund sachgerecht, dass Fernerkundungs-Feldinformationen 9 oftmals nicht in Absolutwerten, sondern lediglich in Relativwerten vorliegen.

Die hohe Übersichtlichkeit der oben angesprochenen Feldzonen 16 kann auch für den Maschinenbediener in vorteilhafter Weise genutzt werden. Hierfür ist es vorzugsweise so, dass in der Maschinen-Steuerroutine 8 die Feldzonen 16 auf die jeweilige Maschinensteuerung zumindest eines Teils der Arbeitsmaschinen 1 übertragen wird und mittels der jeweiligen Maschinensteuerung angezeigt werden. Damit kann der Bediener der jeweiligen Arbeitsmaschine 1 überprüfen, ob die Einteilung der Feldzonen 16 im Hinblick auf die jeweilige Guteigenschaft mit den tatsächlichen Gegebenheiten übereinstimmt oder nicht. Darauf basierend kann der Bediener gegebenenfalls korrigierend in die Steuerung der Arbeitsmaschine 1 eingreifen.

Nach einer weiteren Lehre, der eigenständige Bedeutung zukommt, wird die landwirtschaftliche Arbeitsmaschine 1 zur Durchführung eines oben erläuterten, vorschlagsgemäßen Verfahrens als solche beansprucht. Auf alle diesbezüglichen Ausführungen darf verwiesen werden.

### Bezugszeichenliste

- 1: Arbeitsmaschine
- 2: Maschinenflotte
- 3: Feldkontingent
- 3a, 3b: Felder
- E₁-Eₙ: Ernteaktionen
- 4: Grenzlinie
- 5: Steuersystem
- 6: Grob-Steuerroutine
- 7: Fein-Steuerroutine
- 8: Maschinen-Steuerroutine
- 9: Fernerkundungs-Feldinformationen
- 10: maschinenferne Datenquelle
- 11: Live-Feldinformationen
- 12: Sensoren
- P₁-Pₙ: Ernteprozessketten
- M₁-Mₙ: Maschinensteuerdaten
- 13: maschinenferne Systemhardware
- 14: maschinenseitige Systemhardware
- 15: maschinenferne Datenbank
- 16: Feldzonen

## Patentansprüche

1. Verfahren zur Steuerung einer landwirtschaftlichen Erntekampagne mittels eines Steuersystems (5), in der auf einem der Erntekampagne zugeordneten Feldkontingent (3) vorbestimmte Ernteaktionen (E1 -En ) innerhalb eines Kampagnenzeitraums (tK) von mehreren landwirtschaftlichen Arbeitsmaschinen (1) einer Maschinenflotte (2) abgearbeitet werden, wobei die Steuerung der Erntekampagne mittels dem Steuersystem in unterschiedlichen steuerungstechnischen Anwendungsebenen vollzogen wird, in denen jeweils Informationen erzeugt werden, wobei die erzeugten Informationen jeweils allen anderen Anwendungsebenen bereitgestellt werden und wobei die erzeugten Informationen Fernerkundungs-Feldinformationen umfassen, wobei in einer Grob-Anwendungsebene die Abarbeitungsreihenfolge (A) der Ernteaktionen (E1 -En ) über den Kampagnenzeitraum (tK) erzeugt und den anderen Anwendungsebenen bereitgestellt wird, dass in einer Fein-Anwendungsebene Ernteprozessketten (P1 -Pn ) erzeugt und den anderen Anwendungsebenen bereitgestellt werden und dass in einer Maschinen-Anwendungsebene Maschinensteuerdaten (M1 -Mn ) erzeugt und den anderen Anwendungsebenen bereitgestellt werden.

2. Verfahren nach Anspruch 1, **dadurch gekennzeichnet, dass** den Anwendungsebenen jeweils eine Steuerroutine (6-8) zugeordnet ist, in der der auf die jeweilige Anwendungsebene entfallende Teil der Steuerung der Erntekampagne vollzogen wird, vorzugsweise, dass der Grob-Anwendungsebene eine Grob-Steuerroutine (6) zugeordnet ist, dass der Fein-Anwendungsebene eine Fein-Steuerroutine (7) zugeordnet ist und dass der Maschinen-Anwendungsebene eine Maschinen-Steuerroutine (8) zugeordnet ist.

3. Verfahren nach Anspruch 2, **dadurch gekennzeichnet, dass** in mindestens einer der Steuerroutinen (6-8) georeferenzierte Fernerkundungs-Feldinformationen (9) aus in Bezug auf die Maschinenflotte maschinenfernen Datenquellen verarbeitet werden, dass in mindestens einer der Steuerroutinen (6-8) georeferenzierte Live-Feldinformationen (11) aus maschineneigenen Datenquellen, insbesondere Sensordatenquellen (12), der Maschinenflotte (2) verarbeitet werden und dass zumindest ein Teil dieser Feldinformationen (9, 11) in mindestens zwei Steuerroutinen (6-8) verarbeitet wird, vorzugsweise, dass jede in einer Steuerroutine (6-8) verfügbare Steuerinformation in allen anderen Steuerroutinen (6-8) verfügbar ist.

4. Verfahren nach den Ansprüchen 2 und 3, **dadurch gekennzeichnet, dass** in einer Grob-Steuerroutine (6) basierend auf den Feldinformationen (9, 11) die Abarbeitungsreihenfolge (A) der Ernteaktionen (E1 -En ) über den Kampagnenzeitraum (tK) erzeugt wird, wobei in einer Fein-Steuerroutine (7) basierend auf den Feldinformationen (9, 11) zur Steuerung der Abarbeitungsreihenfolge (A) Ernteprozessketten (P1 -Pn ) erzeugt werden und dass in einer Maschinen-Steuerroutine (8), die während des Erntebetriebs abläuft, basierend auf den Feldinformationen (9, 11) zur Steuerung der Ernteprozessketten (P1 -Pn ) Maschinensteuerdaten (M1 -Mn ) erzeugt werden.

5. Verfahren nach Anspruch 4, **dadurch gekennzeichnet, dass** mindestens ein Teil des Steuersystems (5), insbesondere die Grob-Steuerroutine (6) und die Fein-Steuerroutine (7), auf einer maschinenfernen Systemhardware (13) abläuft bzw. ablaufen und dass mindestens ein Teil des Steuersystems (5), insbesondere die Maschinen-Steuerroutine (8), auf einer maschinenseitigen Systemhardware (14) abläuft.

6. Verfahren nach Anspruch 4 und ggf. nach Anspruch 5, **dadurch gekennzeichnet, dass** in der Grob-Steuerroutine (6) das der Erntekampagne zugeordnete Feldkontingent (3) in Abhängigkeit von mindestens einer Guteigenschaft, die von den Fernerkundungs-Feldinformationen (9) und/oder Live-Feldinformationen (11) abgeleitet wird, in georeferenzierte Feldzonen gegliedert wird, in denen jeweils eine Guteigenschaft einheitlich vorliegt, und dass die Definition der Feldzonen in dem Steuersystem (5) abgelegt wird.

7. Verfahren nach Anspruch 4 und ggf. nach Anspruch 5 oder 6, **dadurch gekennzeichnet, dass** die Maschinensteuerdaten (M1 -Mn ) im Rahmen der Maschinen-Steuerroutine (8) während des Erntebetriebs erzeugt werden und dass die Abarbeitungsreihenfolge im Rahmen der Grob-Steuerroutine (6) und die Ernteprozessketten (P1 -Pn ) im Rahmen der Fein-Steuerroutine (7) zumindest auch vor dem Erntebetrieb erzeugt werden.

8. Verfahren nach Anspruch 4 und ggf. nach einem der Ansprüche 5 bis 7, **dadurch gekennzeichnet, dass** im Rahmen der Fein-Steuerroutine (7) nach einer Optimierungsstrategie optimierte Ernteprozessketten (P1 -Pn ) erzeugt werden, und/oder, dass im Rahmen der Maschinen-Steuerroutine (8) nach einer Optimierungsstrategie optimierte Maschinensteuerdaten (M1 -Mn ) erzeugt werden und dass die optimierten Ernteprozessketten (P1 -Pn ) und/oder die optimierten Maschinensteuerdaten (M1 -Mn ) zusammen mit der jeweils zugeordneten Feldzone (16) als Fernerkundungs-Feldinformationen (9) in dem Steuersystem (5) abgelegt werden.

9. Verfahren nach Anspruch 4 und ggf. nach einem der Ansprüche 5 bis 8, **dadurch gekennzeichnet, dass** im Rahmen der Fein-Steuerroutine (7) und/oder im Rahmen der Maschinen-Steuerroutine (8) der Erzeugung der Ernteprozessketten (P1 -Pn ) und/oder der Erzeugung der Maschinensteuerdaten (M1 -Mn ) für eine Feldzone (16) die dieser Feldzone (16) zugeordneten Fernerkundungs-Feldinformationen (9) zugrunde gelegt werden.

10. Verfahren nach Anspruch 4 und ggf. nach einem der Ansprüche 5 bis 9, **dadurch gekennzeichnet, dass** in der Grob-Steuerroutine (6) die Abarbeitungsreihenfolge (A) der Ernteaktionen (E1 -En ) so definiert wird, dass die Feldzonen (16) jeweils als Einheit abgeerntet werden.

11. Verfahren nach Anspruch 4 und ggf. nach einem der Ansprüche 5 bis 10, **dadurch gekennzeichnet, dass** in der Grob-Steuerroutine (6) die Abarbeitungsreihenfolge (A) zeitreferenziert, insbesondere Tageszeit-referenziert, erzeugt wird und dass hierfür die Fernerkundungs-Feldinformationen (9) Tageszeit-referenziert sind.

12. Verfahren nach Anspruch 4 und ggf. nach einem der Ansprüche 5 bis 11, **dadurch gekennzeichnet, dass** die Feldzonen (16) Tageszeit-referenziert sind und dass in der Grob-Steuerroutine (6) die Gliederung des der Erntekampagne zugeordneten Feldkontingents (3) in Feldzonen (16) separat für unterschiedliche Tageszeiten vorgenommen und in dem Steuersystem (5) abgelegt wird.

13. Verfahren nach Anspruch 4 und ggf. nach einem der Ansprüche 5 bis 12, **dadurch gekennzeichnet, dass** in der Grob-Steuerroutine (6) für den Fall, dass zumindest ein Teil der Feldzonen (16) zu unterschiedlichen Tageszeiten sich verändernde Guteigenschaftswerte, insbesondere Kornfeuchtewerte, annimmt, die Abarbeitungsreihenfolge (A) über den Tagesverlauf im Hinblick auf die sich verändernden Guteigenschaftswerte erzeugt wird.

14. Verfahren nach Anspruch 4 und ggf. nach einem der Ansprüche 5 bis 13, **dadurch gekennzeichnet, dass** zumindest ein Teil der Fernerkundungs-Feldinformationen (9) basierend auf den Live-Feldinformationen (11) kalibriert wird.

15. Verfahren nach Anspruch 4 und ggf. nach einem der Ansprüche 5 bis 14, **dadurch gekennzeichnet, dass** in der Maschinen-Steuerroutine (8) die Feldzonen (16) auf die jeweilige Maschinensteuerung zumindest eines Teils der Arbeitsmaschinen (1) übertragen wird und mittels der jeweiligen Maschinensteuerung angezeigt werden.

16. Verfahren nach Anspruch 4 und ggf. nach einem der Ansprüche 5 bis 15, **dadurch gekennzeichnet, dass** die Fernerkundungs-Feldinformationen (9) ein der Erntekampagne zugeordnetes Feldkontingent (3) betreffende Feldinformationen, insbesondere Biomassekarten, Kornmassekarten, NKB-Massekarten, Abreifekarten, Ertragskarten, Schwadablagekarten, Bodenfeuchtekarten, Taukarten, Unkrautkarten, Wetterinformationen o. dgl. umfassen, die von den maschinenfernen Datenquellen, insbesondere von Satelliten, Drohnen, maschinenfernen Datenbanken o. dgl., bereitgestellt werden.

17. Verfahren nach Anspruch 4 und ggf. nach einem der Ansprüche 5 bis 16, **dadurch gekennzeichnet, dass** die Live-Feldinformationen (11) von den maschinenseitigen Sensoren (12) mindestens einer Arbeitsmaschine (1), vorzugsweise mehrerer Arbeitsmaschinen (1), der Maschinenflotte (2) erzeugt werden.

## Claims

1. A method for controlling an agricultural harvesting campaign by means of a control system (5) in which, on a field allotment (3) associated with the harvesting campaign, prespecified harvesting actions (E1 - En) are executed within a campaign time period (tK) by a plurality of agricultural working machines (1) of a fleet of machines (2), wherein the control of the harvesting campaign is implemented by means of the control system in different control engineering application levels in which information is respectively generated, wherein the respective generated information is made available to all other application levels and wherein the generated information comprises remote sensing field information, wherein in a coarse application level, the execution sequence (A) for the harvesting actions (E1 - En) over the campaign time period (tK) is generated and made available to the other application levels, in that in a fine application level, harvesting process chains (P1 - Pn) are generated and made available to the other application levels, and in that in a machine application level, machine control data (M1 - Mn) are generated and made available to the other application levels.

2. The method according to claim 1, **characterized in that** a respective control routine (6-8) is associated with the application levels, in which control routine the portion of the control of the harvesting campaign allocated to the respective application level is implemented, preferably **in that** a coarse control routine (6) is associated with the coarse application level, **in that** a fine control routine (7) is associated with the fine application level and **in that** a machine control routine (8) is associated with the machine application level.

3. The method according to claim 2, **characterized in that** in at least one of the control routines (6-8), georeferenced remote sensing field information (9) from data sources which are remote with respect to the machines of the fleet of machines are processed, **in that** in at least one of the control routines (6-8), georeferenced live field information (11) from machine-specific data sources of the fleet of machines (2), in particular sensor data sources (12), are processed, and **in that** at least a portion of this field information (9, 11) is processed in at least two control routines (6-8), preferably **in that** all of the control information which is available in a control routine (6-8) is available in all of the other control routines (6-8).

4. The method according to claim 2 and claim 3, **characterized in that** in a coarse control routine (6), the execution sequence (A) for the harvesting actions (E1 - En) over the campaign time period (tK) is generated on the basis of the field information (9, 11), wherein in a fine control routine (7), in order to control the execution sequence (A), harvesting process chains (P1 - Pn) are generated on the basis of the field information (9, 11), and **in that** in a machine control routine (8) which runs during the harvesting operation, in order to control the harvesting process chains (P1 - Pn), machine control data (M1 - Mn) are generated on the basis of the field information (9, 11).

5. The method according to claim 4, **characterized in that** at least a portion of the control system (5), in particular the coarse control routine (6) and the fine control routine (7), runs or run on system hardware (13) which is remote from the machines, and **in that** at least a portion of the control system (5), in particular the machine control routine (8), runs on machine-side system hardware (14).

6. The method according to claim 4 and according to claim 5 if appropriate, **characterized in that** in the coarse control routine (6), as a function of at least one property of the material which is derived from the remote sensing field information (9) and/or live field information (11), the field allotment (3) associated with the harvesting campaign is divided into georeferenced field zones in which a respective property of the material is consistent, and **in that** the definition of the field zones is stored in the control system (5).

7. The method according to claim 4 and according to claim 5 or claim 6 if appropriate, **characterized in that** the machine control data (M1 - Mn) are generated in the context of the machine control routine (8) during the harvesting operation and also **in that** the execution sequence in the context of the coarse control routine (6) and the harvesting process chains (P1 - Pn) in the context of the fine control routine (7) are generated at least before the harvesting operation.

8. The method according to claim 4 and according to one of claims 5 to 7 if appropriate, **characterized in that** in the context of the fine control routine (7), optimised harvesting process chains (P1 - Pn) are generated in accordance with an optimisation strategy, and/or **in that** in the context of the machine control routine (8), optimised machine control data (M1 - Mn) are generated in accordance with an optimisation strategy, and **in that** the optimised harvesting process chains (P1 - Pn) and/or the optimised machine control data (M1 - Mn) together with the respective associated field zone (16) are stored in the control system (5) as the remote sensing field information (9).

9. The method according to claim 4 and according to one of claims 5 to 8 if appropriate, **characterized in that** in the context of the fine control routine (7) and/or in the context of the machine control routine (8), the remote sensing field information (9) associated with a field zone (16) form the basis of the generation of the harvesting process chains (P1 - Pn) and/or the generation of the machine control data (M1 - Mn) for this field zone (16).

10. The method according to claim 4 and according to one of claims 5 to 9 if appropriate, **characterized in that** in the coarse control routine (6), the execution sequence (A) for the harvesting actions (E1 - En) is defined in a manner such that the field zones (16) are respectively harvested as a single entity.

11. The method according to claim 4 and according to one of claims 5 to 10 if appropriate, **characterized in that** in the coarse control routine (6), the execution sequence (A) is generated in a time-referenced manner, in particular with reference to the time of day, and **in that** to this end, the remote sensing field information (9) is with reference to the time of day.

12. The method according to claim 4 and according to one of claims 5 to 11 if appropriate, **characterized in that** the field zones (16) are with reference to the time of day and **in that** in the coarse control routine (6), the division of the field allotment (3) associated with the harvesting campaign into field zones (16) is implemented separately for different times of the day and is stored in the control system (5).

13. The method according to claim 4 and according to one of claims 5 to 12 if appropriate, **characterized in that** in the coarse control routine (6), in the case in which at least a portion of the field zones (16) assume varying property values for the material, in particular grain moisture values, at different times of the day, the execution sequence (A) is generated over the course of the day taking the varying values in the property of the material into consideration.

14. The method according to claim 4 and according to one of claims 5 to 13 if appropriate, **characterized in that** at least a portion of the remote sensing field information (9) is calibrated on the basis of the live field information (11).

15. The method according to claim 4 and according to one of claims 5 to 14 if appropriate, **characterized in that** in the machine control routine (8), the field zones (16) are transmitted to the respective machine controller of at least a portion of the working machines (1) and displayed by means of the respective machine controller.

16. The method according to claim 4 and according to one of claims 5 to 15 if appropriate, **characterized in that** the remote sensing field information (9) comprises field information relating to the field allotment (3) associated with the harvesting campaign, in particular biomass maps, grain mass maps, non-grain constituent mass maps, ripening maps, yield maps, swathe deposit maps, ground moisture maps, dew maps, weed maps, weather information or the like, which are provided by the data sources which are remote from the machines, in particular from satellites, drones, databases which are remote from the machines, or the like.

17. The method according to claim 4 and according to one of claims 5 to 16 if appropriate, **characterized in that** the live field information (11) is generated by the machine-side sensors (12) of at least one working machine (1), preferably a plurality of working machines (1), of the fleet of machines (2).

## Revendications

1. Procédé de contrôle d'une campagne de récolte agricole à l'aide d'un système de contrôle (5), lors de laquelle des actions de récolte (E1-En) prédéfinies sont exécutées par plusieurs machines agricoles (1) d'un parc de machines (2) au cours d'une période de campagne (tK), sur un contingent de champ (3) associé à la campagne de récolte, le contrôle de la campagne de récolte étant réalisé à l'aide du système de contrôle (5) dans des niveaux d'application différents du point de vue de la technique de contrôle, dans lesquels sont générées respectivement des informations, lesdites informations générées étant mises à la disposition respectivement de tous les autres niveaux d'application, et les informations générées comprenant des informations de champ de télédétection, sachant que dans un niveau d'application grossier, l'ordre d'exécution (A) des actions de récolte (E1-En) au cours de la période de campagne (tK) est généré et mis à la disposition des autres niveaux d'application, et que dans un niveau d'application fin, des chaînes de processus de récolte (P1-Pn) sont générées et mises à la disposition des autres niveaux d'application, et que des données de commande de machine (M1-Mn) sont générées dans un niveau d'application de machine et mises à la disposition des autres niveaux d'application.

2. Procédé selon la revendication 1, **caractérisé en ce qu'**est associée aux niveaux d'application, respectivement une routine de contrôle (6-8) dans laquelle est exécutée la partie du contrôle de la campagne de récolte qui correspond au niveau d'application respectif, de préférence **en ce qu'**une routine de contrôle grossière (6) est associée au niveau d'application grossier, **en ce qu'**une routine de contrôle fine (7) est associée au niveau d'application fin, et **en ce qu'**une routine de commande de machine (8) est associée au niveau d'application de machine.

3. Procédé selon la revendication 2, **caractérisé en ce que** des informations de champ de télédétection (9) géoréférencées, issues de sources de données situées à distance des machines par rapport au parc de machines, sont traitées dans au moins une des routines de contrôle (6-8), **en ce que** des informations de champ en direct (11) géoréférencées, issues de sources de données propres aux machines, notamment de sources de données à capteurs (12), du parc de machines (2) sont traitées dans au moins une des routines de contrôle (6-8), et **en ce qu'**au moins une partie de ces informations de champ (9, 11) est traitée dans au moins deux routines de contrôle (6-8), de préférence **en ce que** chaque information de contrôle disponible dans une routine de contrôle (6-8) est disponible dans toutes les autres routines de contrôle (6-8).

4. Procédé selon les revendications 2 et 3, **caractérisé en ce que** l'ordre d'exécution (A) des actions de récolte (E1-En) au cours de la période de campagne (tK) est généré dans une routine de contrôle grossière (6), sur la base des informations de champ (9, 11), où des chaînes de processus de récolte (P1-Pn) sont générées dans une routine de contrôle fine (7), sur la base des informations de champ (9, 11), à des fins de contrôle de l'ordre d'exécution (A), et **en ce que** des données de commande de machine (M1-Mn) sont générées dans une routine de commande de machine (8) qui est exécutée pendant l'opération de récolte, sur la base des informations de champ (9, 11), à des fins de contrôle des chaînes de processus de récolte (P1-Pn).

5. Procédé selon la revendication 4, **caractérisé en ce qu'**au moins une partie du système de contrôle (5), notamment la routine de contrôle grossière (6) et la routine de contrôle fine (7), se déroule sur un matériel de système (13) situé à distance de la machine, et **en ce qu'**au moins une partie du système de contrôle (5), notamment la routine de commande de machine (8), se déroule sur un matériel de système (14) situé côté machine.

6. Procédé selon la revendication 4 et le cas échéant selon la revendication 5, **caractérisé en ce que** dans la routine de contrôle grossière (6), le contingent de champ (3) associé à la campagne de récolte est divisé en zones de champ géoréférencées, en fonction d'au moins une propriété du produit à récolter qui est dérivée des informations de champ de télédétection (9) et/ou des informations de champ en direct (11), zones dans lesquelles respectivement une propriété du produit à récolter est présente de manière uniforme, et **en ce que** la définition des zones de champ est enregistrée dans le système de contrôle (5).

7. Procédé selon la revendication 4 et le cas échéant selon la revendication 5 ou 6, **caractérisé en ce que** les données de commande de machine (M1-Mn) sont générées dans le cadre de la routine de commande de machine (8), au cours de l'opération de récolte, et **en ce que** l'ordre d'exécution est généré dans le cadre de la routine de contrôle grossière (6) et les chaînes de processus de récolte (P1-Pn) sont générées dans le cadre de la routine de contrôle fine (7), au moins également avant l'opération de récolte.

8. Procédé selon la revendication 4 et le cas échéant selon une des revendications 5 à 7, **caractérisé en ce que** dans le cadre de la routine de contrôle fine (7), sont générées des chaînes de processus de récolte (P1-Pn) optimisées selon une stratégie d'optimisation, et/ou **en ce que** dans le cadre de la routine de commande de machine (8), sont générées des données de commande de machine (M1-Mn) optimisées selon une stratégie d'optimisation, et **en ce que** les chaînes de processus de récolte (P1-Pn) optimisées et/ou les données de commande de machine (M1-Mn) optimisées sont enregistrées dans le système de contrôle (5), conjointement avec la zone de champ (16) respective associée, en tant qu'informations de champ de télédétection (9).

9. Procédé selon la revendication 4 et le cas échéant selon une des revendications 5 à 8, **caractérisé en ce que** dans le cadre de la routine de contrôle fine (7) et/ou dans le cadre de la routine de commande de machine (8), la génération des chaînes de processus de récolte (P1-Pn) et/ou la génération des données de commande de machine (M1-Mn) pour une zone de champ (16) ont pour base les informations de champ de télédétection (9) associées à cette zone de champ (16).

10. Procédé selon la revendication 4 et le cas échéant selon une des revendications 5 à 9, **caractérisé en ce que** dans la routine de contrôle grossière (6), l'ordre d'exécution (A) des actions de récolte (E1-En) est défini de manière à ce que les zones de champ (16) soient soumises à la récolte respectivement en tant qu'unité.

11. Procédé selon la revendication 4 et le cas échéant selon une des revendications 5 à 10, **caractérisé en ce que** dans la routine de contrôle grossière (6), l'ordre d'exécution (A) est généré en référence au temps, notamment en référence à l'heure de la journée, et **en ce que** l'on procède à cet effet au référencement des informations de champ de télédétection (9) en fonction de l'heure de la journée.

12. Procédé selon la revendication 4 et le cas échéant selon une des revendications 5 à 11, **caractérisé en ce que** les zones de champ (16) sont référencées en fonction de l'heure de la journée et **en ce que** dans la routine de contrôle grossière (6), la division du contingent de champ (3), associé à la campagne de récolte, en zones de champ (16) est réalisée séparément pour des heures différentes de la journée et est enregistrée dans le système de contrôle (5).

13. Procédé selon la revendication 4 et le cas échéant selon une des revendications 5 à 12, **caractérisé en ce que** dans le cas où au moins une partie des zones de champ (16) adopte des valeurs de propriété de culture qui varient à des heures différentes de la journée, notamment des valeurs d'humidité des grains, la routine de contrôle grossière (6) génère l'ordre d'exécution (A) au cours de la journée, par rapport aux valeurs de propriété de culture qui varient.

14. Procédé selon la revendication 4 et le cas échéant selon une des revendications 5 à 13, **caractérisé en ce qu'**au moins une partie des informations de champ de télédétection (9) est calibrée sur la base des informations de champ en direct (11).

15. Procédé selon la revendication 4 et le cas échéant selon une des revendications 5 à 14, **caractérisé en ce que** dans la routine de commande de machine (8), les zones de champ (16) sont transmises à la commande de machine respective d'au moins une partie des machines de travail (1) et sont visualisées à l'aide de la commande de machine respective.

16. Procédé selon la revendication 4 et le cas échéant selon une des revendications 5 à 15, **caractérisé en ce que** les informations de champ de télédétection (9) comprennent des informations de champ concernant un contingent de champ (3) associé à la campagne de récolte, notamment des cartes de biomasse, des cartes de masse de grains, des cartes de masse de constituants non grains, des cartes de maturation complète, des cartes de rendement, des cartes d'andainage, des cartes d'humidité du sol, des cartes de rosée, des cartes de mauvaises herbes, des informations météorologiques et autres, qui sont fournies par les sources de données situées à distance des machines, notamment par des satellites, des drones, des bases de données ou autres dispositifs situés à distance des machines.

17. Procédé selon la revendication 4 et le cas échéant selon une des revendications 5 à 16, **caractérisé en ce que** les informations de champ en direct (11) sont générées par les capteurs (12), situés côté machine, d'au moins une machine de travail (1), de préférence de plusieurs machines de travail (1), du parc de machines (2).
